# EUROPEAN PATENT APPLICATION

(11) **EP 4 752 941 A1**
(43) Date of publication of application: **03.06.2026**
(21) Application number: 25187618.1
(22) Date of filing: 04.07.2025
(51) Int. Cl.: H01M 4/04, H01M 10/04

(54) **ELECTRODE MANUFACTURING DEVICE AND METHOD OF MANUFACTURING ELECTRODE USING THE SAME**

(30) Priority: 28.11.2024 KR 20240173333
(71) Applicant: SAMSUNG SDI CO., LTD., Yongin-si, Gyeonggi-do 17084 (KR)
(72) Inventor: Lee, Jun Sub, 16678 Suwon-si, Gyeonggi-do (KR); Jun, Pil Goo, 16678 Suwon-si, Gyeonggi-do (KR)
(74) Representative: Michalski Hüttermann & Partner Patentanwälte mbB

(57) **Abstract**

The present disclosure relates to an electrode manufacturing device and a method of manufacturing an electrode using the same, and the technical objects to be solved are directed to providing an electrode manufacturing device and a method of manufacturing an electrode using the same, in which a defect rate in a winding process is minimized by accurately measuring an extent of elongation before/after rolling of an electrode and a length of a slurry elongated after the rolling. To this end, the present disclosure provides a transfer part (100) which moves an electrode (20) coated with an active material, a rolling part (200) which rolls the electrode, a marking part (300) which is provided in front of the rolling part and forms a plurality of mark portions on the electrode, a measurement part (400) which measures distances between the mark portions before the rolling and after the rolling of the electrode, and a control part (500) which calculates an extent of elongation by comparing measurement results of the measurement part.

## Description

### CROSS-REFERENCE TO RELATED APPLICATION

The present application claims priority and the benefit of Korean Patent Application No. 10-2024-0173333, filed on November 28, 2024 in the Korean Intellectual Property Office.

### BACKGROUND

### 1. Field

The present disclosure relates to an electrode manufacturing device and a method of manufacturing an electrode using the same.

### 2. Description of the Related Art

In general, the demand for secondary batteries with high energy density and capacity has recently dramatically increased according to the rapid supply of electronic apparatuses using batteries, such as portable phones, notebook computers, and electric vehicles. Accordingly, research and development for improving performance of lithium secondary batteries are actively being conducted.

A lithium secondary battery is a battery which includes a positive electrode and a negative electrode including an active material capable of intercalation and deintercalation of lithium ions and electrolytes and produces electric energy through oxidation and reduction reactions when lithium ions are intercalated/deintercalated at the positive electrode and negative electrode.

A surface of a thin metal film (foil) formed of aluminum or copper is coated with an electrode material capable of transferring electrons to manufacture a secondary battery including lithium ions and the like. An electrode of the secondary battery includes a non-coated portion on which the electrode material is not applied and which functions as a terminal part. That is, the electrode includes the non-coated portion in which the foil is not coated with the electrode material and a coated portion which extends from the non-coated portion in a first direction and in which the foil is coated with the electrode material.

The above information disclosed in this Background section is provided for enhancement of understanding of the background of the present disclosure, and, therefore, it may contain information that does not constitute related (or prior) art.

### SUMMARY

Embodiments include an electrode manufacturing device, including a transfer part configured to move an electrode coated with an active material in a positive X-axis direction, a rolling part configured to roll the electrode, a marking part with regard to the positive X-axis direction in front of the rolling part, the marking part configured to make a plurality of mark portions on the electrode, a measurement part configured to measure distances between the plurality of mark portions before rolling the electrode and after rolling the electrode, and a control part configured to calculate an extent of elongation by comparing measurement results of the measurement part.

The plurality of mark portions may be on a non-coated portion on an edge of the electrode spaced a predetermined distance from each other in a longitudinal direction of the electrode. The longitudinal direction is preferably the X-axis direction.

The measurement part may include a first measurement part in front of the rolling part, the first measurement part measuring the distances between the plurality of mark portions before rolling the electrode, and a second measurement part behind the rolling part, the second measurement part measuring the distances between the mark portions after rolling the electrode.

The first measurement part and the second measurement part may each include one or more charged coupled device sensors configured to convert the mark portions into digital data.

The electrode manufacturing device may further include an elongation extent correction part configured to apply a tensile force to the electrode to reach a reference extent of elongation of the electrode according to the extent of elongation calculated by the control part.

The elongation extent correction part may be behind the rolling part, and the elongation extent correction part may be configured to press the electrode in one direction to change an angle of the electrode.

The elongation extent correction part may include a pressing roller configured to guide the electrode, and a variable driving part configured to change a position of the pressing roller to change the angle of the electrode with respect to a horizontal line.

The elongation extent correction part may further include an angle sensor configured to measure the angle of the electrode, and the variable driving part may be further configured to set the angle of the electrode in multiple stages.

The variable driving part may include a linear motion guide configured to linearly move the pressing roller, and a sub-motor operating the linear motion guide.

The electrode manufacturing device may further include a fine tensile force adjustment part behind the elongation extent correction part, the fine tensile force adjustment part configured to finely control a magnitude of the tensile force applied to the electrode according to the extent of elongation of the electrode.

The fine tensile force adjustment part may include a tension meter configured to measure the tensile force applied to the electrode, and a tension roller part configured to adjust the tensile force by applying pressure to the electrode or reduce the tensile force according to the magnitude of the tensile force measured by the tension meter.

The tension roller part may include a plurality of tension roller parts, and the plurality of tension roller parts may include a first tension roller movable by a cylinder and a second tension roller behind the first tension roller, the second tension roller swinging by a motor.

Embodiments include a method of manufacturing an electrode, the method including forming a plurality of mark portions on an electrode, measuring a first distance between the plurality of mark portions, rolling the electrode to have a predetermined thickness, resulting in a rolled electrode, measuring a second distance between the plurality of mark portions of the rolled electrode, and comparing measurement values before rolling the electrode and after rolling the electrode to calculate an extent of elongation of the electrode.

In forming the plurality of mark portions, the plurality of mark portions may be formed on a non-coated portion on an edge of the electrode spaced a predetermined distance from each other in a longitudinal direction of the electrode.

Measuring the first distance and measuring the second distance may each include converting the plurality of mark portions into digital data.

The method may further include correcting the extent of elongation of the electrode, after the extent of elongation is calculated, and applying a tensile force to the electrode such that the extent of elongation reaches a target extent of elongation.

Correcting the extent of elongation may include pressing the electrode by a pressing roller to change a transfer angle of the electrode after rolling the electrode.

Comparing the measurement values may include controlling a position of the pressing roller in multiple stages.

After correcting the extent of elongation of the electrode, measuring a tensile force applied to the electrode, and finely adjusting a magnitude of the tensile force applied to the electrode according to the extent of elongation of the electrode.

Measuring the tensile force may include measuring, by a tension meter, the tensile force applied to the electrode, resulting in a measured tensile force, and adjusting the tensile force by applying pressure to the electrode or reducing the tensile force according to a magnitude of the measured tensile force.

### BRIEF DESCRIPTION OF THE DRAWINGS

Features will become apparent to those of ordinary skill in the art by describing in detail exemplary embodiments with reference to the attached drawings, in which:
FIG. 1 is a schematic view illustrating a configuration of an electrode manufacturing device according to an embodiment of the present disclosure;
FIG. 2 is a schematic perspective view illustrating a rolling part of the electrode manufacturing device according to an embodiment of the present disclosure;
FIG. 3 is a plan view illustrating an electrode before/after rolling performed by the electrode manufacturing device according to an embodiment of the present disclosure;
FIG. 4 is a view for describing calculation of an extent of elongation after the rolling performed by the electrode manufacturing device according to an embodiment of the present disclosure;
FIG. 5 is a view illustrating an elongation extent correction part of the electrode manufacturing device according to an embodiment of the present disclosure;
FIG. 6 is a table showing tensile force control items according to an extent of elongation of an electrode manufactured by the electrode manufacturing device according to an embodiment of the present disclosure;
FIG. 7 is a view illustrating adjustment of a tensile force according to an extent of elongation of the electrode manufactured by the electrode manufacturing device according to an embodiment of the present disclosure;
FIG. 8 is a view illustrating a fine tensile force adjustment part of the electrode manufacturing device according to an embodiment of the present disclosure;
FIG. 9 is a view illustrating an operation of the fine tensile force adjustment part of the electrode manufacturing device according to an embodiment of the present disclosure;
FIG. 10 is a configuration diagram for a method of manufacturing an electrode according to an embodiment of the present disclosure; and
FIG. 11 is a flowchart illustrating the method of manufacturing an electrode according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those of ordinary skill in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

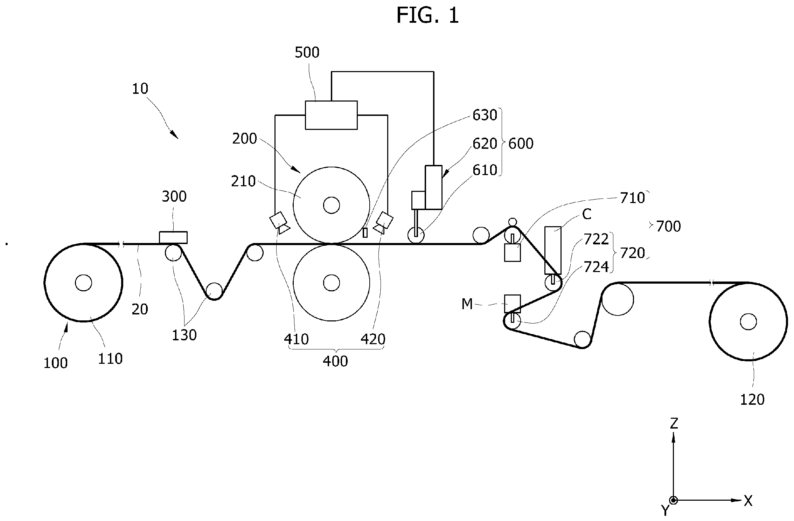

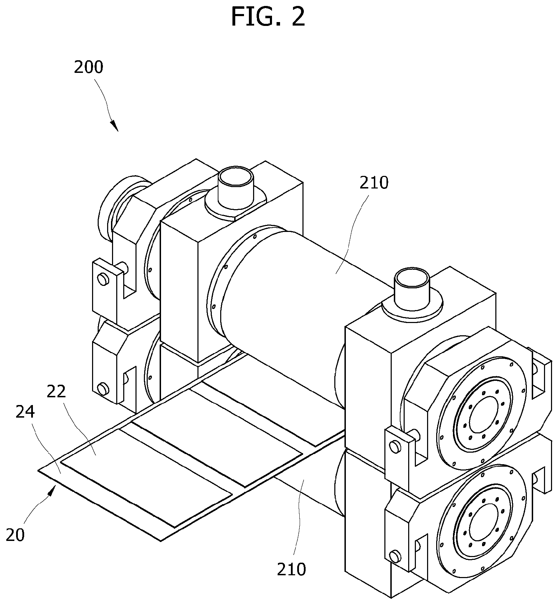

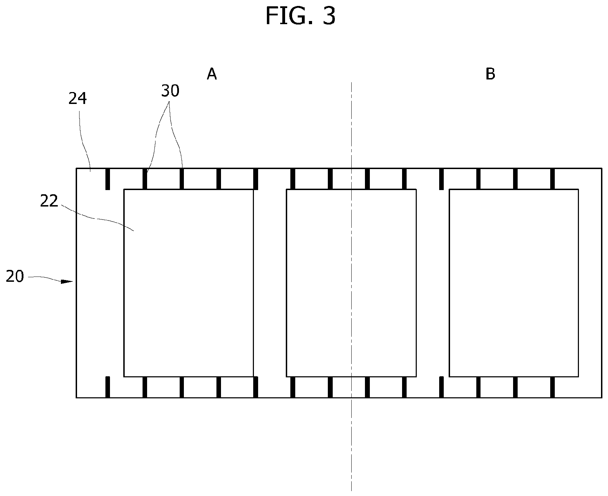

FIG. 1 is a schematic view illustrating a configuration of an electrode manufacturing device according to an embodiment of the present disclosure, FIG. 2 is a schematic perspective view illustrating a rolling part of the electrode manufacturing device according to an embodiment of the present disclosure, and FIG. 3 is a plan view illustrating an electrode before/after rolling performed by the electrode manufacturing device according to an embodiment of the present disclosure.

Referring to FIGS. 1 to 3, an electrode manufacturing device 10 according to an embodiment of the present disclosure may include a transfer part 100, a rolling part 200, a marking part 300, a measurement part 400, and a control part 500.

An electrode 20 may be a current collector in the form of a sheet, film, or metal foil including a metal material such as copper. A coating agent is a material with which the sheet is coated and forms a layer having a predetermined thickness, and for example, may be an active material for the positive or negative electrode 20. When the sheet is coated with the active material such as a coating agent for the electrode 20, the sheet may be divided into a coated portion 22 which is a portion coated with the active material for the electrode 20 and a non-coated portion 24 which is a portion which is not coated with the coating agent.

The transfer part 100 may include an unwinding unit 110 and a winding unit 120. In addition, the rolling part 200 may be located between the unwinding unit 110 and the winding unit 120 and may roll the electrode 20 moved from the unwinding unit 110 to the winding unit 120.

The rolling part 200 presses the electrode 20 which is coated with the active material, dried, and transferred in one direction (e.g., the X-axis direction). The rolling part 200 may include rolling rolls 210 which are disposed on and under the electrode 20 and provide a rolling force to the electrode 20.

Specifically, the rolling rolls 210 may be disposed on and under the electrode 20 in a direction perpendicular to a transfer direction of the electrode 20 (e.g., the Z-axis direction) and may press the electrode 20. Each of the rolling rolls 210 may be formed in any of various shapes such as rod and column shapes extending in a width direction of the electrode 20. The rolling rolls 210 according to an embodiment may be formed in a pair of cylindrical shapes, and a pair of rolling rolls 210 may rotate about rotation centers to move the electrode 20 which is disposed between the pair of rolling rolls 210 and is in contact with outer circumferential surfaces of the rolling rolls 210 in the one direction. In addition, the rolling rolls 210 may move the electrode 20 and press the electrode 20 in the direction perpendicular to the transfer direction at the same time as described above.

In the present embodiment, a plurality of guide rollers 130 may be provided between the unwinding unit 110 and the winding unit 120.

The guide rollers 130 may function as components which transfer the electrode 20, and the electrode 20 may be transferred while maintaining a predetermined tensile force through arrangement thereof.

The marking part 300 may be provided at a front side of the rolling part 200 (e.g., in the negative X-axis direction between the unwinding unit 110 and the rolling part 200). The marking part 300 may function as a component for forming mark portions 30 for measuring an extent of elongation of the electrode 20.

As an example, the marking part 300 may form the mark portions 30 using an inkjet printer or laser marker, and the mark portions 30 may be formed to be spaced at predetermined intervals in a longitudinal direction of the electrode 20.

In the present embodiment, as illustrated in FIG. 3, the mark portions 30 may be formed at intervals of 5 mm on the non-coated portion 24 on an edge of the electrode 20.

The measurement part 400 may function as a component which measures distances between the mark portions 30 before and after rolling of the electrode 20 with rolling part 200.

The measurement part 400 may include a first measurement part 410 which is provided in front of the rolling part 200 and measures the distance of the mark portions 30 before the rolling of the electrode 20 and a second measurement part 420 which is provided behind the rolling part 200 and measures the distance between the mark portions 30 after the rolling of the electrode 20.

Portion A of FIG. 3 shows the distance between the mark portions 30 before the rolling. Portion B of FIG. 3 shows the distance between the mark portions 30 after the rolling performed by the rolling part 200.

The first measurement part 410 and the second measurement part 420 may be provided as charged coupled device (CCD) sensors which convert the mark portions 30 into digital data. The CCD sensors are devices which convert optical signals into electrical signals to convert an image into digital data and may convert a change in distance between the mark portions 30 into digital data and transmit the digital data to the control part 500.

The control part 500 may calculate an extent of elongation by comparing measurement results of the measurement part 400.

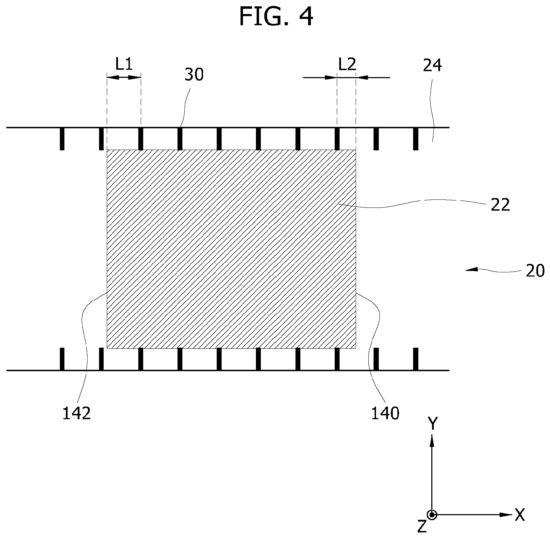

FIG. 4 is a view for describing calculation of an extent of elongation after the rolling performed by the electrode manufacturing device according to an embodiment of the present disclosure.

Referring to FIG. 4, the mark portions 30 formed on the electrode 20 may be measured by the first measurement part 410 before the rolling, and the mark portions 30 formed on the electrode 20 rolled by the rolling part 200 may be measured by the second measurement part 420 to calculate an extent of elongation of the electrode 20.

The number of the mark portions 30 corresponding to the coated portion 22 (e.g., mark portions 30 adjacent to the coated portion 22) is counted in an image captured by each of the first measurement part 410 and the second measurement part 420. In addition, in a portion other than the coated portion 22 of the electrode 20, a distance L2 between a front end 140 (e.g., the first end of the coated portion 22 processed) of the coated portion 22 and the mark portion 30 is measured, a distance L1 between a rear end 142 (e.g., the second end of the coated portion 22 processed) of the coated portion 22 and the mark portion 30 is measured, and the distance L2 and the distance L1 are transmitted to the control part 500. The control part 500 may then compare an increased distance (e.g., compare L2 and L1) between the mark portions 30, the number of the mark portions 30, distances between the front end 140 of the coated portion 22 and the mark portion 30, and distances between the rear end 142 of the coated portion 22 and the mark portion 30, which are measured by the first measurement part 410 and the second measurement part 420, together to calculate the extent of elongation of the electrode 20.

An elongation extent correction part 600 (see FIG. 1), which applies a tensile force to the electrode 20 to reach a target extent of elongation of the electrode 20 according to the extent of elongation calculated by the control part 500, may be provided behind the rolling part 200 (e.g., in the positive X-axis direction between the rolling part 200 and the winding unit 120).

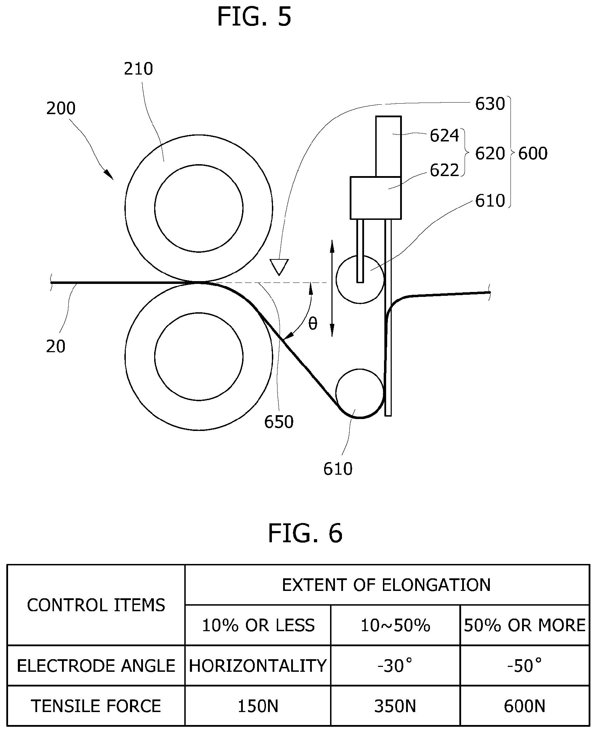

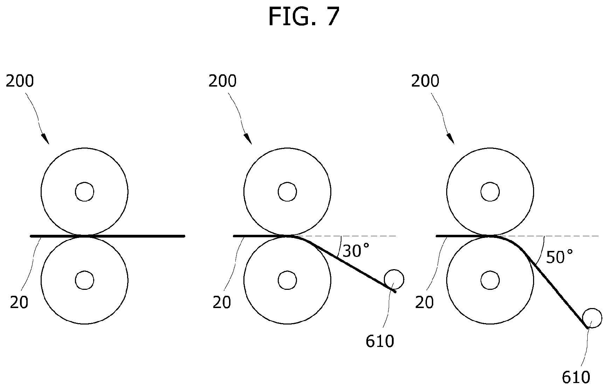

FIG. 5 is a view illustrating the elongation extent correction part 600 of the electrode manufacturing device 10 according to an embodiment of the present disclosure, FIG. 6 is a table showing tensile force control items according to an extent of elongation of the electrode 20 manufactured by the electrode manufacturing device 10 according to an embodiment of the present disclosure, and FIG. 7 is a view illustrating adjustment of a tensile force according to (e.g., based on) an extent of elongation of the electrode 20 manufactured by the electrode manufacturing device 10 according to an embodiment of the present disclosure.

Referring to FIGS. 5 to 7, the elongation extent correction part 600 according to the present embodiment may be provided behind the rolling part 200 and may press the electrode 20 in one direction to change an angle of the electrode 20.

The elongation extent correction part 600 may include a pressing roller 610 which guides the electrode 20 and a variable driving part 620 which changes a position of the pressing roller 610 to change an angle of the electrode 20 with respect to a horizontal line.

That is, when a calculated extent of elongation of the electrode 20 does not reach the target extent of elongation, the pressing roller 610 may press the electrode 20 to change an angle of the electrode 20 to provide a tensile force to the electrode 20 to achieve the target extent of elongation of the electrode 20.

The pressing roller 610 may be provided behind the rolling part 200 and may push and press the electrode 20 downward to provide the tensile force to the electrode 20.

In this case, the elongation extent correction part 600 may include an angle sensor 630 which measures an angle of the electrode 20, and the variable driving part 620 may be controlled in multiple stages to set an angle of the electrode 20 in multiple stages.

In order to control an angle of the electrode 20 in multiple stages using the pressing roller 610, the variable driving part 620 may include a linear motion (LM) guide 622 which linearly moves the pressing roller 610 and a sub-motor 624 which operates the LM guide 622.

Since the pressing roller 610 may be vertically moved by a driving force of the sub-motor 624 according to the LM guide 622, an angle of the electrode 20 may be set in multiple stages.

Referring to FIGS. 6 and 7, the pressing roller 610 may perform control in three stages. That is, when an extent of elongation is measured using the control part 500, in a case in which a difference value of a measured extent of elongation to the target extent of elongation is less than 10% thereof, the electrode 20 may be controlled to pass through the rolling part 200 and move horizontally. In this case, a tensile force applied to the electrode 20 is 150 N.

In addition, when a difference value of a measured extent of elongation to the target extent of elongation is 10% or more and less than 50% thereof, in order to increase the extent of elongation, the pressing roller 610 may be moved downward (e.g., in the negative Z-axis direction) such that an angle Θ of the electrode 20 becomes -30° with respect to the horizontal line 650 to additionally secure an extent of elongation of the electrode 20. In this case, a tensile force applied to the electrode 20 is 350 N.

In addition, when a difference value of a measured extent of elongation to the target extent of elongation is 50% or more, in order to increase an extent of elongation, the pressing roller 610 may be moved further downward such that an angle of the electrode 20 becomes -50° with respect to the horizontal line 650 to significantly secure an extent of elongation of the electrode 20. In this case, a tensile force applied to the electrode 20 is 600 N.

Since the elongation extent correction part 600 may provide a predetermined tensile force to the electrode 20 elongated after the rolling, defects such as wrinkles generated in the electrode 20 can be prevented.

A fine tensile force adjustment part 700 may be provided behind the elongation extent correction part 600 (see FIG. 1).

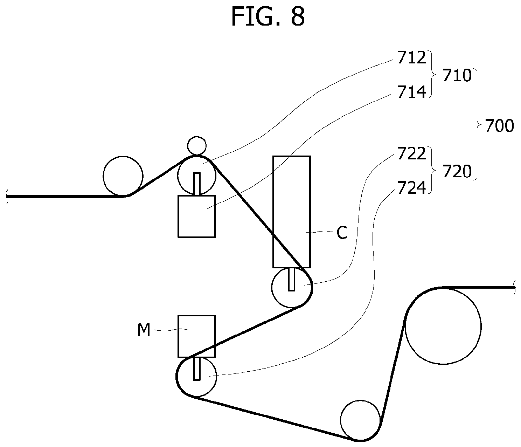

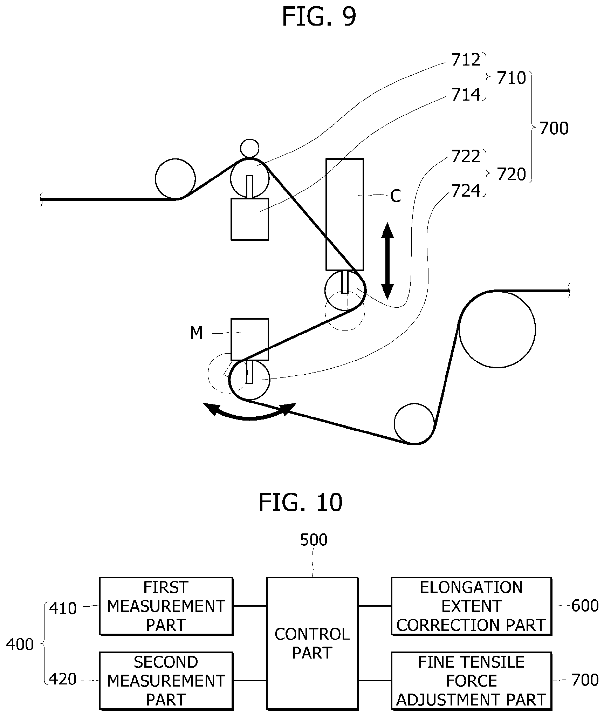

FIG. 8 is a view illustrating the fine tensile force adjustment part 700 of the electrode manufacturing device 10 according to an embodiment of the present disclosure, and FIG. 9 is a view illustrating an operation of the fine tensile force adjustment part 700 of the electrode manufacturing device 10 according to an embodiment of the present disclosure.

Referring to FIGS. 8 and 9, the fine tensile force adjustment part 700 according to the present embodiment may function as a component which is disposed behind the elongation extent correction part 600 and finely adjusts a magnitude of a tensile force applied to the electrode 20 according to an extent of elongation of the electrode 20.

The fine tensile force adjustment part 700 may be provided to accurately meet the target extent of elongation of the electrode 20. That is, the fine tensile force adjustment part 700 may serve to quickly reduce an error in proportion to a present error, adjust an error accumulated over time, significantly adjust an extent of control when an error changes quickly, and slightly adjust an extent of control when an error changes stably to reduce vibrations or changes.

As an example, the fine tensile force adjustment part 700 may include a tension meter 710 which measures a tensile force applied to the electrode 20 and a tension roller part 720 which adjusts the tensile force by applying a pressure to the electrode 20 or reducing the tensile force according to a magnitude of the tensile force measured by the tension meter 710.

The tension meter 710 may include a measurement roller 712 and a load cell 714. The tension meter 710 may detect a force applied to the electrode 20 and convert the force into an electrical signal to calculate a tensile force applied to the electrode 20.

In addition, the tension roller part 720 may be provided as a plurality of tension roller parts 720 and may include a first tension roller 722 which may be moved by a cylinder C and a second tension roller 724 disposed behind the first tension roller 722 and swung by a motor M.

The first tension roller 722 serves to directly adjust a pressure applied to the electrode 20. A magnitude of a force applied by the cylinder C may be adjusted to change a tensile force. The first tension roller 722 may serve to set and maintain a basic level of a tensile force.

The second tension roller 724 serves to absorb a change in tensile force applied to the electrode 20 while being swung by the motor. The second tension roller 724 is a dancer roller which, for example, when a tensile force increases, moves upward to provide an extra force, or conversely, when a tensile force decreases, moves downward to increase the tensile force again. That is, the second tension roller 724 may serve to maintain a tensile force by quickly acting against a sudden change in tensile force.

As described above, the first tension roller 722 may focus to constantly maintain the basic level of a tensile force using the cylinder C, and the second tension roller 724 may more finely adjust a tensile force by acting more quickly when a change in tensile force occurs.

In the present embodiment, the first tension roller 722 and the second tension roller 724 may be used together to stably maintain a tensile force applied to the electrode 20 at a rear end behind the rolling part 200.

A method of manufacturing the electrode 20 according to an embodiment of the present disclosure will be described below.

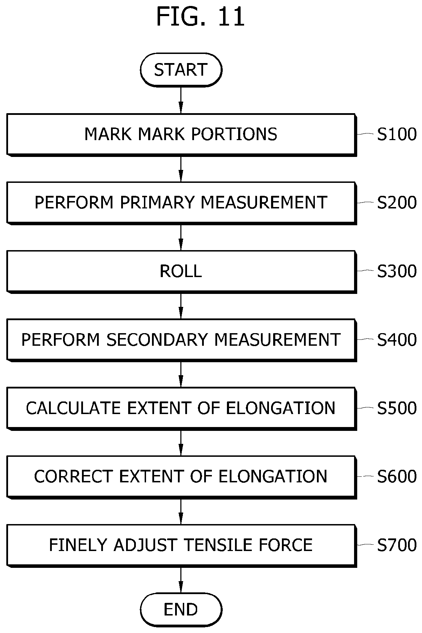

FIG. 10 is a configuration diagram for the method of manufacturing the electrode 20 according to an embodiment of the present disclosure, and FIG. 11 is a flowchart illustrating the method of manufacturing the electrode 20 according to an embodiment of the present disclosure.

Referring to FIGS. 1 to 11, the method of manufacturing the electrode 20 according to the present embodiment may include a marking operation S100, a first measurement operation S200, a rolling operation S300, a second measurement operation S400, and an extent of elongation calculation operation S500.

Mark portions 30 may be formed on the electrode 20, which is transferred by the transfer part 100, by the marking part 300 (S100). The mark portions 30 may be formed on the non-coated portion 24 at an edge of the electrode 20 by the inkjet printer or laser marker to be spaced a predetermined distance from each other in the longitudinal direction the electrode 20.

The electrode 20, on which the mark portions 30 are formed by the marking part 300, may be transferred along the guide roller 130.

The mark portions 30 of the electrode 20 may then be measured (S200). The measuring of the mark portions 30 may be performed by the first measurement part 410 provided in front of the rolling part 200. In addition, the number of the mark portions 30 of the electrode 20 may be counted, and a distance between the mark portions 30 may be measured by the first measurement part 410 provided as the CCD sensor. That is, the first measurement part 410 may measure reference points for calculating an extent of elongation of the electrode 20.

Measurement values measured by the first measurement part 410 may be transmitted to the control part 500.

After the mark portions 30, which are the reference points, are measured by the first measurement part 410, the electrode 20 is transferred by the transfer part 100 and rolled by the rolling part 200 (S300).

The rolling part 200 presses the electrode 20 which is coated with the active material, dried, and transferred in one direction. The rolling part 200 may be disposed on and under the electrode 20, and the rolling rolls 210 may provide a rolling force to press the electrode 20. That is, the electrode 20, which is disposed between the pair of rolling rolls 210 and is contact with the outer circumferential surfaces of the rolling rolls 210, may be transferred in one direction (e.g., the X-axis direction), and the rolling rolls 210 may transfer the electrode 20 and press the electrode 20 in the direction perpendicular to the transfer direction (e.g., the Z-axis direction) to roll the electrode 20 at the same time.

The mark portions 30 of the rolled electrode 20 may then be measured (S400). The measuring of the mark portions 30 of the rolled electrode 20 may be performed by the second measurement part 420 provided behind the rolling part 200. In addition, the number of the mark portions 30 may be counted, and a distance between the mark portions 30 may be measured by the second measurement part 420 provided as a CCD sensor like the first measurement part 410.

An extent of elongation of the electrode 20 is calculated by the control part 500 on the basis of the measurement values of the mark portions 30 measured by the first measurement part 410 and the second measurement part 420 (S500).

More specifically, the measurement values of the mark portions 30 measured by the first measurement part 410 before the rolling and the measurement values of the mark portions 30 measured by the second measurement part 420 after the rolling performed by rolling part 200 may be compared to calculate the extent of elongation.

Referring to FIG. 4, the number of the mark portions 30 corresponding to the coated portion 22 in an image captured by each of the first measurement part 410 and the second measurement part 420 is counted. In addition, in a portion without having the coated portion 22 of the electrode 20, a distance L2 between the front end of the coated portion 22 and the mark portion 30 is measured, and a distance L1 between the rear end of the coated portion 22 and the mark portion 30 is measured, and the distance L2 and the distance L1 are transmitted to the control part 500. The extent of elongation of the electrode 20 may be calculated by comparing an increased distance between the mark portions 30, the numbers of the mark portions 30, the distances between the front end of the coated portion 22 and the mark portion 30, and the distances between the rear end of the coated portion 22 and the mark portion 30, which are obtained from the measurement values, together.

As described above, as the mark portions 30 of the electrode 20 are measured before the rolling and after the rolling and compared to calculate the extent of elongation, a length of the coated portion 22 can be reliably measured.

After the extent of elongation is calculated, an elongation extent correction operation of correcting the extent of elongation of the electrode 20 by applying a tensile force to the electrode 20 such that the extent of elongation of the electrode 20 reaches a target extent of elongation may be performed (S600).

After the rolling of the electrode 20, the pressing rollers 610 may press the electrode 20 to change a transfer angle of the electrode 20.

Referring to FIGS. 6 and 7, the correcting of the extent of elongation of the electrode 20 may be performed by control of the pressing roller 610. Since the pressing roller 610 may be controlled in multiple stages, one of various tensile forces may be applied to the electrode 20 according to the extent of elongation calculated by the control part 500 to reach the target extent of elongation of the electrode 20.

More specifically, when the extent of elongation is measured by the control part 500, in a case in which a difference value of the measured extent of elongation to the target extent of elongation is less than 10% thereof, the electrode 20 may pass through the rolling parts 200 and move horizontally such that a tensile force of 150 N is applied to the electrode 20, and in a case in which a difference value of the measured extent of elongation to the target extent of elongation is 10% or more and less than 50%, in order to increase the extent of elongation, the pressing rollers 610 may be moved downward such that an angle of the electrode 20 becomes -30° with respect to the horizontal line 650 to apply a tensile force of 350 N to the electrode 20, so that an extent of elongation of the electrode 20 may be additionally secured.

In addition, in a case in which a difference value of the measured extent of elongation to the target extent of elongation is 50% or more thereof, in order to increase the extent of elongation, the pressing rollers 610 may be moved further downward such that an angle of the electrode 20 becomes -50° with reference to the horizontal line to apply a tensile force of 600 N to the electrode 20, so that a significant extent of elongation of the electrode 20 may be secured. Accordingly, since the target extent of elongation may be obtained and a predetermined tensile force may be applied to the electrode 20 through the correcting of the extent of elongation, defects such as wrinkles generated on the electrode 20 can be prevented.

After the elongation extent correction operation, a fine tensile force adjustment operation of measuring the tensile force applied to the electrode 20 and finely controlling a magnitude of the tensile force applied to the electrode 20 according to the extent of elongation of the electrode 20 may be further performed (S700).

The fine adjusting of the tensile force applied to the electrode 20 may be performed to accurately obtain the target extent of elongation of the electrode 20. In addition, since the predetermined tensile force may be maintained, defects such as wrinkles of the electrode 20 can be prevented.

More specifically, in the fine adjusting of the tensile force applied to the electrode 20, as the tensile force applied to the electrode 20 is measured by the tension meter 710, and the tensile force applied to the electrode 20 is adjusted by the tension roller part 720 according to the tensile force measured by the tension meter 710, the target extent of elongation of the electrode 20 can be accurately met, and generation of wrinkles on the electrode 20 can be prevented.

In this case, as the tension roller part includes the first tension roller 722 driven by the cylinder C and the second tension roller 724 swung by the motor, the tensile force generated in the electrode 20 can be adjusted.

The tension meter 710 may include the measurement roller 712 and the load cell 714. A force applied to the electrode 20 may be detected, and the force may be converted into an electrical signal to calculate a tensile force applied to the electrode 20.

In addition, as the tension roller part 720 is provided as the plurality of tension roller parts 720 and includes the first tension roller 722 which is moved by the cylinder C and the second tension roller 724 which is disposed behind the first tension roller 722 and swung by the motor, a basic level of a tensile force applied to the electrode 20 may be constantly maintained by the first tension roller 722, and a change in tensile force applied to the electrode 20 may be quickly responded to by the second tension roller 724, so that the tensile force applied to the electrode 20 can be more precisely adjusted.

In order to increase the density of the coated portion, although it is needed to perform roll press rolling for rolling into a set thickness and to measure an extent of elongation before/after the rolling and an accurate length of the coated portion after the rolling, since an existing trigger type laser sensor for measuring a present length and a method of calculating a pulse value of an encoder attached to a surface of a rotating roller have a large error due to slip or the like between a foil and the roller, there is a problem that it is difficult to obtain required measurement reliability.

In addition, a method of obtaining a sample after rolling, manually performing measurement on the sample, and inputting a correction value has a problem that productivity is reduced, and real-time monitoring is difficult.

As described above, when the electrode is rolled in order to increase a density of the coated portion which is coated and dried, since an extent of elongation before/after rolling and a length of the coated portion after the rolling may be accurately measured to minimize a defect rate in the winding process, and a tensile force applied to the electrode may be adjusted according to the extent of elongation after the rolling of the electrode, a target extent of elongation can be obtained, and defects such as wrinkles of the electrode can be prevented.

According to the present disclosure, a defect rate in a winding process can be minimized by accurately measuring an extent of elongation before/after rolling and a length of a slurry after the rolling when the rolling is performed to increase a density of the slurry with which an electrode is coated and dried.

According to the present disclosure, since a tensile force applied to an electrode can be adjusted according to an extent of elongation after rolling of the electrode, a target extent of elongation can be achieved, and defects such as wrinkles of the electrode can be prevented.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. An electrode manufacturing device (10), comprising:
a transfer part configured to move an electrode (20) coated with an active material in a positive X-axis direction;
a rolling part (200) configured to roll the electrode (20);
a marking part (300) with regard to the positive X-axis direction in front of the rolling part (200), the marking part (300) configured to make a plurality of mark portions (30) on the electrode (20);
a measurement part (400) configured to measure distances between the plurality of mark portions (30) before rolling the electrode (20) and after rolling the electrode (20); and
a control part (500) configured to calculate an extent of elongation by comparing measurement results of the measurement part (400).

2. The electrode manufacturing device (10) as claimed in claim 1, wherein the plurality of mark portions (30) are on a non-coated portion (24) on an edge of the electrode (20) spaced a predetermined distance from each other in a longitudinal direction of the electrode (20), the longitudinal direction preferably being the X-axis direction.

3. The electrode manufacturing device (10) according to any of the previous claims, wherein the measurement part (400) includes:
a first measurement part (410) in front of the rolling part (200), the first measurement part (410) measuring the distances between the plurality of mark portions (30) with regard to the positive X-axis direction before rolling the electrode (20), and
a second measurement part (420) with regard to the positive X-axis direction behind the rolling part (200), the second measurement part (420) measuring the distances between the mark portions (30) after rolling the electrode (20).

4. The electrode manufacturing device (10) as claimed in claim 3, wherein the first measurement part (410) and the second measurement part (420) each includes one or more charged coupled device sensors configured to convert the mark portions (30) into digital data.

5. The electrode manufacturing device (10) according to any of the previous claims, further comprising an elongation extent correction part (600) configured to apply a tensile force to the electrode (20) to reach a reference extent of elongation of the electrode (20) according to the extent of elongation calculated by the control part (500).

6. The electrode manufacturing device (10) as claimed in claim 5, wherein the elongation extent correction part (600) is with regard to the positive X-axis direction behind the rolling part (200), the elongation extent correction part (600) configured to press the electrode (20) in one direction to change an angle of the electrode (20) in relation to the horizontal.

7. The electrode manufacturing device (10) according to any of claims 5 or 6, wherein the elongation extent correction part (600) includes:
a pressing roller (610) configured to guide the electrode (20), and
a variable driving part (620) configured to change a position of the pressing roller (610) to change the angle of the electrode (20) with respect to the horizontal.

8. The electrode manufacturing device (10) as claimed in claim 7, wherein:
the elongation extent correction part (600) further includes an angle sensor configured to measure the angle of the electrode (20) with respect to the horizontal, and
the variable driving part (620) is further configured to set the angle of the electrode (20) with respect to the horizontal in multiple stages.

9. The electrode manufacturing device according to any of claims 7 or 8, wherein the variable driving part (620) includes:
a linear motion guide (622) configured to linearly move the pressing roller (610), and
a sub-motor (624) operating the linear motion guide (622).

10. The electrode manufacturing device (10) according to any of claims 5 to 9, further comprising a fine tensile force adjustment part (700) with regard to the positive X-axis direction behind the elongation extent correction part (600), the fine tensile force adjustment part (700) configured to finely control a magnitude of the tensile force applied to the electrode (20) according to the extent of elongation of the electrode (20).

11. The electrode manufacturing device as claimed in claim 10, wherein the fine tensile force adjustment part (700) includes:
a tension meter configured (710) to measure the tensile force applied to the electrode (20), and
a tension roller part (720) configured to adjust the tensile force by applying pressure to the electrode (20) or reduce the tensile force according to the magnitude of the tensile force measured by the tension meter (710).

12. The electrode manufacturing device (10) as claimed in claim 11, wherein:
the tension roller part (720) includes a plurality of tension roller parts, and
the plurality of tension roller parts include a first tension roller (722) movable by a cylinder (C) and a second tension roller (724) with regard to the positive X-axis direction behind the first tension roller (722), the second tension roller (724) swinging by a motor (M).

13. A method of manufacturing an electrode (20), preferably with an electrode manufacturing device (10) configured according to any of the previous claims, the method comprising:
forming a plurality of mark portions (30) on an electrode (20);
measuring a first distance between the plurality of mark portions (30);
rolling the electrode (20) to have a predetermined thickness, resulting in a rolled electrode (20);
measuring a second distance between the plurality of mark portions (30) of the rolled electrode (20); and
comparing measurement values before rolling the electrode (20) and after rolling the electrode (20) to calculate an extent of elongation of the electrode (20).

14. The method as claimed in claim 13, wherein, in forming the plurality of mark portions (30), the plurality of mark portions (30) are formed on a non-coated portion (24) on an edge of the electrode (20) spaced a predetermined distance from each other in a longitudinal direction of the electrode (20), the longitudinal direction preferably being the X-axis direction.

15. The method as claimed in claim 13, wherein measuring the first distance and measuring the second distance each include converting the plurality of mark portions (30) into digital data.
